# EUROPÄISCHE PATENTSCHRIFT

(11) **EP 2 370 226 B1**
(45) Veröffentlichungstag und Bekanntmachung des Hinweises auf die Patenterteilung: **24.02.2016**
(21) Anmeldenummer: 09810838.4
(22) Anmeldetag: 21.12.2009
(51) Int. Cl.: B23C 5/22, B23C 5/24

(54) **WERKZEUG MIT EINEM LÖSBAR GESPANNTEN SCHNEIDKÖRPER**
TOOL HAVING DETACHABLY CLAMPED CUTTING BODY
OUTIL POURVU D'UN CORPS DE COUPE POUVANT ÊTRE SERRÉ DE MANIÈRE AMOVIBLE

(30) Priorität: 24.12.2008 DE 102008063127
(43) Veröffentlichungstag der Anmeldung: 05.10.2011
(73) Patentinhaber: Gühring OHG, 72458 Albstadt (DE)
(72) Erfinder: HECKEL, Gerd, 90617 Puschendorf (DE); HOLLFELDER, Hans-Peter, 90768 Fürth (DE)
(74) Vertreter: Meitinger, Thomas Heinz
(86) Internationale Anmeldenummer: PCT/DE2009/001790
(87) Internationale Veröffentlichungsnummer: WO 2010/072206

(56) Entgegenhaltungen:
- EP-A1- 0 385 495
- EP-A1- 1 293 280
- EP-A2- 0 146 030
- DE-A1- 4 236 370
- US-A- 4 230 427
- US-B1- 6 579 044

## Beschreibung

Die Erfindung betrifft ein Werkzeug gemäß dem Oberbegriff des Patentanspruchs 1.

Mit Schneidplatten, z.B. Wendeschneidplatten, bestückte Werkzeuge werden in der Regel dann eingesetzt, wenn es darum geht, Funktionsflächen mit größtmöglicher Präzision zu bearbeiten und gleichzeitig die Einsatzdauer des Werkzeugs möglich hoch zu halten, um die Wirtschaftlichkeit des verhältnismäßig teuren Werkzeugs auf einem möglichst hohen Niveau zu halten. Es sind verschiedene Ansätze bekannt, derartige Werkzeuge zu gestalten.

So ist beispielsweise aus der DE 3037576 A1 ein Werkzeug bekannt, bei dem zur Fixierung eines Schneidkörpers, im Besonderen einer Wendeschneidplatte, eine Spannpratze verwendet wird, die mittels einer Spannschraube gegen einen Trägerkörper gepresst wird und dabei mit einem auskragenden Endabschnitt gegen den Schneidkörper drückt, der dadurch flächig gegen eine erste Stützfläche am Trägerkörper gespannt wird. Die Stützfläche am Trägerkörper steht in einem spitzen Winkel zu einer zweiten Stützfläche am Trägerkörper, wodurch beim Spannen der Spannpratze der Schneidkörper eine Kraftkomponente in Richtung der zweiten Stützfläche am Trägerkörper erfährt. In einer Richtung parallel zu den beiden Stützflächen ist die Lage des Schneidkörpers relativ zum Trägerkörper durch eine dritte, ebenfalls am Trägerkörper ausgebildete Stützfläche bestimmt. Die Lage des Schneidkörpers relativ zum Trägerkörper ist somit durch, drei Stützflächen am. Trägerkörper eindeutig vorgegeben. Eine Feinjustierung des Schneidkörpers beispielsweise in eine radiale Richtung ist nicht vorgesehen. Ein Mitverdrehen der Spannpratze beim Einschrauben der Spannschraube soll durch eine Drehsicherung in Form eines im Trägerkörper befestigten Stifts erreicht werden, der in eine entsprechende Nut an der Spannpratze eingreift Gleichwohl muss der Stift mit einem - wenn auch minimalen - seitlichen Spiel in der Nut der Spannpratze geführt sein, um eine Relativbewegung zwischen Spannpratze und Drehsicherungsstift beim Einschrauben der Spannschraube zu ermöglichen. Ein Mitverdrehen der Spannpratze und damit ein Verrutschen des Schneidkörpers relativ zum Trägerkörper kann also nicht gänzlich ausgeschlossen werden.

Die EP 1293280 B1 zeigt und beschreibt ein Werkzeug, bei dem ein Schneidkörper ebenfalls mittels einer Spannpratze flächig gegen eine Stützfläche an einem Trägerkörper gedrückt wird. Im Unterschied zur DE 3037576 A1 ist der Schneidkörper in einer Tasche in der Spannpratze aufgenommen und ist die Spannpratze mit dem in der Tasche aufgenommenen Schneidkörper relativ zum Trägerkörper fein positionierbar.

Die EP 0 146 030 A2 zeigt ein Schneidwerkzeug zu spanabhebenden Metallbearbeitung.

Die US 4 230 427 A zeigt ein Schneidwerkzeug mit zwei an einem Grundkörper integrierten Halteklauen für ein Schneidelement.

Wie eingangs bereits erwähnt, werden gattungsgemäße Werkzeuge dann eingesetzt, wenn Funktionsflächen mit hoher Güte und engen Toleranzanforderungen wirtschaftlich bearbeitet werden sollen. Um die Einstellzeiten des Werkzeugs bzw. die Um- rüstzeit möglichst kurz zu halten, wird an ein derartiges Werkzeug die Anforderung gestellt, innerhalb kürzester Zeit eine exakte Einstellung der Funktionsschneide(n) des Schneidkörpers relativ zum Trägerkörper, beispielsweise zur Drehachse des Trägerkörpers bzw. zu einem weiteren vom Trägerkörper getragenen Werkzeug vornehmen zu können. Es ist deshalb wichtig, das Werkzeug so auszubilden, dass der Schneidkörper, insbesondere in Form einer Wendeschneidplatte, nicht nur stabil vom Trägerkörper getragen wird, sondern auch mit einfachen Handgriffen und schnell nach erfolgter Grundpositionierung feinjustiert und festgespannt werden kann.

Der Erfindung liegt die Aufgabe zu Grunde, ein Werkzeug der eingangs beschriebenen Art derart weiterzubilden, dass es mit einer einfachen Konstruktion gelingt, einen Schneidkörper, insbesondere eine Wendeschneidplatte nach DIN, stets lagegenau und stabil am Trägerkörper zu fixieren.

Diese Aufgabe wird durch ein Werkzeug mit den Merkmalen des Patentanspruchs 1 gelöst. Vorteilhafte Weiterbildungen der Erfindung sind Gegenstand abhängiger Ansprüche.

Wie beansprucht, umfasst das Werkzeug: einen Trägerkörper, einen am Trägerkörper lösbar angeordneten Schneidkörper und eine Spannpratze zum lagegenauen Fixieren des Schneidkörpers relativ zum Trägerkörper,
wobei der Schneidkörper flächig gegen eine Stützfläche am Trägerkörper gedrückt wird,
wobei die Spannpratze einstückig mit dem Trägerkörper ausgebildet und über ein Materialgelenk mit dem Trägerkörper verbunden ist,
wobei der Schneidkörper in Richtung des Materialgelenks an einer stirnseitigen Stützfläche der Spannpratze abgestützt ist, und
wobei die Stützfläche am Trägerkörper unter einem spitzen Winkel α zur stirnseitigen Stützfläche der Spannpratze steht und zum Materialgelenk hin blickt.

Gemäß der Erfindung ist der Schneidkörper in einer Richtung parallel zur Stützfläche am Trägerkörper und parallel zur stirnseitigen Stützfläche der Spannpratze lageeinstellbar angeordnet und die Spannpratze ist durch einen vom Materialgelenk ausgehenden, sich zu einer Drehachse des Werkzeugs achsparallel erstreckenden L-förmigen Schlitz vom Trägerkörper abgegrenzt.

Dazu kann das Werkzeug ein im Trägerkörper aufgenommenes Verstellelement umfassen, das dazu ausgebildet ist, eine Feinverstellung des Schneidkörpers in der Richtung parallel zur Stützfläche am Trägerkörper und parallel zur stirnseitigen Stützfläche der Spannpratze zu ermöglichen.

Das Verstellelement kann aus einer von der Stirnseite des Werkzeugs aus axial verstellbaren Kegelschraube mit einer Kegelmantelfläche, an der der Schneidkörper anliegt, gebildet sein.

Das Werkstück kann insbesondere ein rundlaufendes Werkzeug für die Bearbeitung, insbesondere spanabhebende Bearbeitung, von Werkstücken sein.

Bei dem erfindungsgemäßen Werkzeug ist die Spannpratze einstückig mit dem Trägerkörper ausgebildet und über ein Materialgelenk mit dem Trägerkörper verbunden. Die Spannpratze ist somit aus dem Werkzeug- bzw. Trägerkörperrohling herausgearbeitet. Dank der festen Verbindung der zum Schneidkörper hin auskragenden Spannpratzen mit dem Trägerkörper über das Materialgelenk ist eine unerwünschte Relativbewegung der Spannpratze relativ zum Trägerkörper ausgeschlossen. Daher ist eine unerwünschte Relativbewegung der Spannpratze beim Spannen derselben gegen den Schneidkörper von vornherein ausgeschlossen. Dank der festen Verbindung der Spannpratze mit dem Trägerkörper kann femer die Anzahl der Bauteile auf ein Minimum beschränkt bleiben, wodurch auch der Kraftfluss von der/den Funktionsschnei- de(n) des Schneidkörpers zum Trägerkörper optimiert wird. Da die Spannpratze einstückig mit dem Trägerkörper ausgebildet ist, wird auch wenig Bauraum benötigt, so dass das erfindungsgemäße Spannprinzip für alle Arten von Werkzeugen, d.h. auch für Werkzeuge mit kleinen Arbeitsdurchmessern, und Werkzeugmaterialien anwendbar ist. Da die Befestigung des Schneidkörpers, der wie der Trägerkörper aus sämtlichen gängigen Werkstücken hergestellt sein kann, am Trägerkörper nicht unmittelbar sondern über die Spannpratze erfolgt, können auch kleinste Schneidkörper eingesetzt werden, die andernfalls z.B. durch einen zentralen Durchbruch zur Aufnahme einer Spannschraube zu sehr geschwächt würden. Der Schneidkörper kann daher großflächig am Trägerkörper anliegen.

Wie bereits erwähnt weist die Spannpratze an ihrem auskragenden Endabschnitt eine stirnseitige Stützfläche auf, die den Schneidkörper in Richtung des Materialgeienks abstützt. Die am Trägerkörper definierte Stützfläche steht in einem spitzen Winkel (beispielsweise zwischen 75° und 85°, vorzugsweise in etwa 80°) zu der an der Spannpratze definierten stirnseitigen Stützfläche und weist zum Materialgelenk hin. Der spitze Winkel zwischen der zum Materialgelenk hinweisenden Stützfläche am Trägerkörper und der stirnseitigen Stützfläche an der Spannpratze gewährleistet, dass der Schneidkörper beim Spannen gegen die Stützfläche am Trägerkörper zugleich eine Kraftkomponente in eine Richtung hin zum Materialgelenk erfährt. Vorteilhafterweise ist diese Richtung der Vorschubrichtung des Werkzeugs entgegengerichtet, entspricht also bei Bohr-, Senk- oder Reibwerkzeugen der Axialrichtung, bei Fräswerkzeugen je nach Ausführung der Axial- oder Radialrichtung. Sowohl die stirnseitige Stützfläche an der

Spannpratze wie auch die in einem spitzen Winkel zu dieser stehende Stützfläche am Trägerkörper sind vorzugsweise parallel mit der "Gelenkachse" des Materialgelenks ausgerichtet. In jedem Fall ist durch die erfindungsgemäße Konstruktion eine eindeutig definierte und damit zuverlässige und stabile Anlage des Schneidkörpers sowohl an der am Trägerkörper definierten Stützfläche als auch der an der Spannpratze definierten stirnseitigen Stützfläche gewährleistet. Eine weitere Abstützung des Schneidkörpers in eine Richtung parallel zu der am Trägerkörper definierten Stützfläche und der an der Spannpratze definierten stirnseitigen Stützfläche erfolgt nicht durch eine zusätzliche am Trägerkörper starr vorgesehene Stützfläche, sondern kann wie erwähnt durch ein im Trägerkörper aufgenommenes Verstellelement bewirkt werden, das eine Feinverstellung des Schneidkörpers in eine Richtung parallel zu der am Trägerkörper definierten Stützfläche und der an der Spannpratze definierten stirnseitigen Stützfläche gewährleistet. Die am Trägerkörper definierte Stützfläche, die an der Spannpratze definierte stirnseitige Stützfläche und d.as Verstellelement definieren damit eine Aufnahme bzw. einen Sitz für den Schneidkörper, in der bzw. in dem der Schneidkörper statisch bestimmt und in eine Richtung parallel zu der am Trägerkörper definierten Stützfläche und der an der Spannpratze definierten stirnseitigen Stützfläche lageeinstellbar abgestützt ist. In einer bevorzugten Weiterbildung ist der Schneidkörper bei axialer Abstützung an der an der Spannpratze definierten stirnseitigen Stützfläche zusätzlich radial einstellbar an der am Trägerkörper definierten Stützfläche abgestützt. Die zusätzliche Abstützung des Schneidkörpers in eine Richtung parallel zu der am Trägerkörper definierten Stützfläche und der an der Spannpratze definierten stirnseitigen Stützfläche erfolgt vorzugsweise durch eine am Trägerkörper verstellbar gehaltene Kegelschraube, die von der Stirnseite des Werkzeugs aus betätigbar ist. Die Feinverstellung in radialer Richtung mittels einer Kegelschraube hat sich in der Praxis bewährt. Die Abgrenzung der Spannpratze vom Trägerkörper erfolgt wie oben vorgeschlagen durch einen vom Materialgelenk ausgehenden achsparallel erstreckenden L-förmigen Schlitz. Bei dieser Weiterbildung kragt die Spannpratze in axiale Richtung aus und steht die "Gelenkachse" des Materialgelenks senkrecht zur Drehachse des Werkzeugs. Gerade bei rundlaufenden Werkzeugen mit zylindrischem Querschnitt lässt sich durch eine Bearbeitung eines Trägerkörperrohlings z.B. mittels eines Fräswerkzeugs in zwei um 90° zueinander versetzten Ebenen auf einfache Weise ein L-förmiger Schlitz erzeugen, der die Spannpratze vom Trägerkörper abgrenzt. Um über die Querschnittsfläche der Spannpratze einen gleichmäßigen Kraftfluss in den Trägerkörper zu erhalten, hat die Spannpratze, in axialer Richtung betrachtet, zumindest in dem an das Materialgelenk angrenzenden Längenabschnitt vorzugsweise einen im Wesentlichen quaderförmigem Querschnitt. Die Geometrie der Spannpratze kann dadurch sehr einfach gehalten werden.

Eine konstruktive einfache und in der Praxis bewährte Spannung der Spannpratze gegen den Schneidkörper Iässt sich mittels einer in einer Durchgangsbohrung in der Spannpratze angeordneten Spannschraube erzielen, die im Trägerkörper verschraubt ist.

Vorzugsweise ist der Schneidkörper als eine längliche Schneidplatte, vorzugsweise Wendeschneidplatte mit diametral gegenüberliegenden Schneidkanten, ausgebildet, die entlang einer Längskante eine Aussparung aufweist, in die der stirnseitige Endabschnitt der Spannpratze formschlüssig eingreift. Die Aussparung ist aus fertigungstechnischen Gründen vorteilhaft von zwei im rechten Winkel zueinander stehenden Flächen definiert. Für den Formschluss mit der Aussparung ist der stirnseitige Endabschnitt der Spannpratze, der in die Aussparung eingreift, komplementär geformt. Der formschlüssige Eingriff der Spannpratze in den Schneidkörper gewährleistet eine eindeutig bestimmte und stabile Anlage der Spannpratze am Schneidkörper, wodurch die Montage und Umrüstung erleichtert wird.

Im Sinne einer Vereinfachung der Fertigung des Schneidkörpers ist die Aussparung über die gesamte Länge des Schneidkörpers durchgängig ausgebildet, d.h. sie an den beiden Stirnseiten des Schneidkörpers aus. Zur Montage muss der Werkzeugbediener lediglich den Schneidkörper so auf die am Trägerkörper definierte Stützfläche legen, dass die Spannpratze in die Aussparung eingreift, und soweit in die Richtung parallel zu der am Trägerkörper definierten Stützfläche und der an der Spannpratze definierten stirnseitigen Stützfläche verschieben, bis der Schneidkörper an der zusätzlichen Stützfläche zur Anlage kommt.

Vorzugsweise ist der in die Aussparung am Schneidkörper eingreifende stirnseitige Endabschnitt der Spannpratze so bemessen, dass er im Wesentlichen über die gesamte Länge des Schneidkörpers flächig in die Aussparung eingreift. Durch die dadurch erhaltene großflächige Anlage der Spannpratze am Schneidkörper ergibt sich eine gleichmäßige Spannkraftüberträgung auf den Schneidkörper.

Dank der vorstehend erwähnten Merkmale erfolgt die Beanspruchung des Schneidkörpers, insbesondere einer Wendeschneidplatte, derart, dass der Schneidkörper jeweils großflächig einerseits an der Spannpratze und andererseits an der Stützfiäche am Trägerkörper anliegt. Kontaktspannungen können dadurch minimiert werden, was insbesondere dann von Vorteil ist, wenn extrem harte Schneidwerkstoffe, wie z.B. Hartmetall, Keramik-Werkstoffe oder Cermet-Werkstoffe Anwendung finden. Auch kann die auf den Schneidkörper aufgebrachte Spannkraft angehoben werden. Ferner bleibt dank des flächigen Kontakts des Schneidkörpers sowohl mit der Stützfläche am Trägerkörper wie auch der stirnseitigen Stützfläche an der Spannpratze die Beanspruchung des Schneidkörpers beim Spannen der Spannpratze gut kontrollierbar. Der Schneidkörper kann dementsprechend bereits mit ausreichend großer Kraft gegen die Stützfläche am Trägerkörper gedrückt werden, bevor eine Feinjustierung z.B. der radialen Lage des Schneidkörpers vorgenommen wird.

Es hat sich gezeigt, dass das erfindungsgemäße Konzept der Schneidkörperspannung besonders dann vorteilhaft ist, wenn das Werkzeug als drehangetriebenes, rundlaufendes Werkzeug, z.B. Bohrungsnachbearbeitungswerkzeug, wie z.B. Senker, gestaltet wird. In diesem Fall kommt die Einfachheit der Konstruktion besonders gut zum tragen, da sich der reduzierte Bauraum zusätzlich positiv auf das Schwingungsverhalten des Werkzeugs auswirkt. Von zusätzlichem Vorteil ist dabei auch, dass der Spanabtransport durch die Spannkonstruktionen für den Schneidkörper nur unwesentlich beeinträchtigt wird, und zwar selbst dann, wenn die Funktionsschneiden des Schneidkörpers auf einem kleinen Durchmesser liegen. Bei drehangetriebenen, rundlaufenden Werkzeugen kann die Spannpratze in eine Richtung parallel zur Drehachse des Werkzeugs auskragen und die "Gelenkachse" des Materialgelenks senkrecht, beispielsweise radial, zur Drehachse stehen. In diesem Fall stützt die stirnseitige Stützfläche der Spannpratze den Schneidkörper in axialer Richtung des Werkzeugs. Alternativ dazu kann die Spannpratze aber z.B. in eine Richtung senkrecht zur Drehachse, beispielsweise in radiale Richtung, auskragen und die "Gelenkachse" des Materialgelenks parallel zur Drehachse verlaufen. In diesem alternativen Fall stützt die stirnseitige Stützfläche der Spannpratze den Schneidkörper in eine Richtung senkrecht zur Drehachse. Bei stehenden Werkzeugen, z.B. einem Drehmeißel, kann die Spannpratze beispielsweise in Zustellrichtung auskragen und die "Gelenkachse" des Materialgelenks in eine Richtung senkrecht zur Zustellrichtung ausgerichtet sein.

Das erfindungsgemäße Werkzeug soll daher nicht auf einen bestimmten Werkzeugtyp beschränkt sein. Das in den Ansprüchen angegebene und oben gewürdigte Konzept zur Spannung eines Schneidkörpers an einem Trägerkörper ist vielmehr - soweit dies technisch möglich ist- auf verschiedene Werkzeugtypen und Werkzeuge zur Spannung axial und/oder radial abzustützender Schneidkörper übertragbar.

Nachfolgend wird die Erfindung am Beispiel eines rundlaufenden Werkzeugs, z.B. Senkwerkzeugs, erläutert, bei dem eine Wendeschneidplatte in einem bezüglich der Drehachse radial ausgerichteten Sitz an einem Trägerkörper aufgenommen und in axialer Richtung an einer axial auskragenden Spannpratze abgestützt ist.

In der Zeichnung zeigt:
Fig. 1 eine perspektivische Ansicht eines stirnseitigen Schneidteilabschnitts eines erfindungsgemäßen Werkzeugs;
Fig. 2 eine axiale Draufsicht auf den Schneidteilabschnitts des erfindungsgemäßen Werkzeugs aus Fig. 1;
Fig. 3 eine Seitenansicht eines Teilbereichs des Schneidteilabschnitts des erfindungsgemäßen Werkzeugs aus Fig. 1;
Fig. 4 eine Seitenansicht des Schneidteilabschnitts des erfindungsgemäßen Werkzeugs aus Fig. 1 in einer um 90° gegenüber Fig. 3 verdrehten Winkellage bezüglich der Drehachse des erfindungsgemäßen Werkzeugs;
Fig. 5 eine Perspektivansicht eines Trägerkörpers des erfindungsgemäßen Werkzeugs aus Fig. 1 ;
Fig. 6 eine Seitenansicht eines Schneidkörpers des erfindungsgemäßen Werkzeugs aus Fig. 1 Fig. 7 eine Draufsicht des Schneidkörpers aus Fig. 6;
Fig. 8 eine Seitenansicht einer Radialverstellschraube bzw. Kegelschraube des erfindungsgemäßen Werkzeugs aus Fig. 1; und
Figur 9 eine Seitenansicht einer Spannschraube des erfindungsgemäßen Werkzeugs aus Fig. 1.

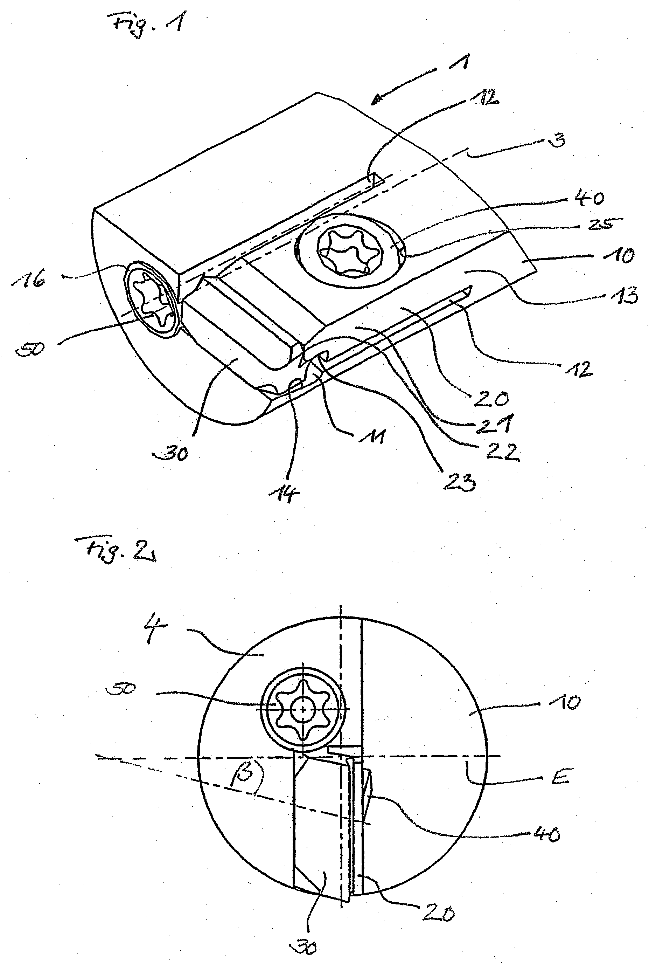

Fig. 1 zeigt ein erfindungsgemäßes Werkzeug 1 in Form eines Senkwerkzeugs mit einer Drehachse 3. Das Werkzeug 1 weist einen Trägerkörper 10, einen am Trägerkörper 10 lösbar und lageeinstellbar angeordneten Schneidkörper 30, eine einstückig mit dem Trägerkörper 10 ausgebildete Spannpratze 20 zum lagegenauen Fixieren des Schneidkörpers 30 relativ zum Trägerkörper 10, eine Spannschraube 40 zum Spannen der Spannpratze 20 gegen den Schneidkörper 30, sowie ein Verstellelement 50 zum Verstellen des Schneidkörpers 30 in eine Richtung senkrecht zur Drehachse 3 auf Der Trägerkörper 10 des Werkzeugs 1 weist einen in den Figuren nicht gezeigten, üblichen Spannschaft zum Spannen des Werkzeugs 1 in einer geeigneten Werkzeugaufnahme auf.

Wie aus Fig. 2 ersichtlich ist, ist der Trägerkörper 10 aus einem zylindrischen Rohling gefertigt, der in seinem vorderen Bereich bis zur Stirnseite des Werkzeugs 1 achsparallel abgeflacht ist.

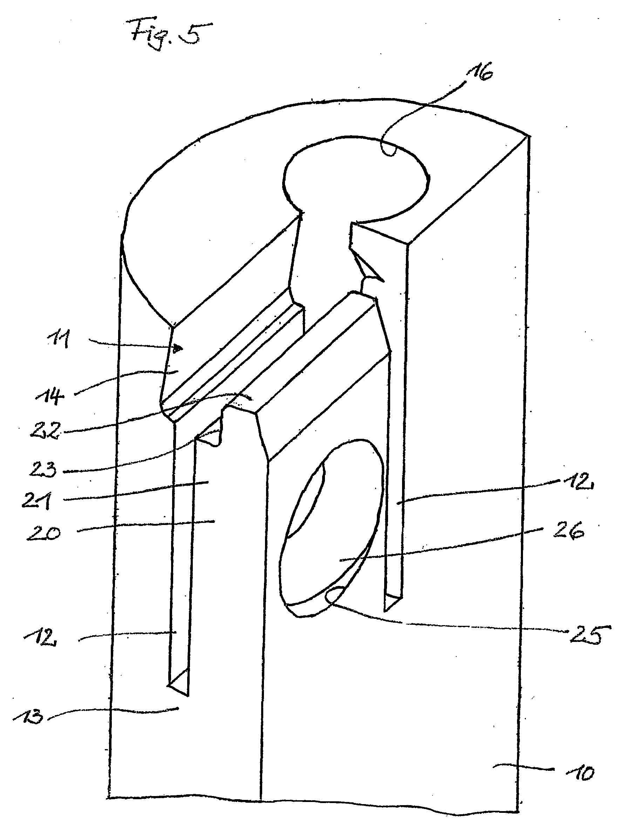

Man erkennt aus Fig. 1 bis 5, dass der Trägerkörper 10 eine stirn- und umfangsseitig zugängliche, winkelförmige Ausnehmung 11 aufweist, in der der Schneidkörper 30 sitzt, und weiter, dass die Spannpratze 20 einstückig mit dem Trägerkörper 10 ausgebildet ist.

Die einstückig mit dem Trägerkörper 10 ausgebildete Spannpratze 20 ist durch einen im Querschnitt L-förmigen Schlitz 12 vom Trägerkörper 10 abgegrenzt. Der L-förmige Schlitz 12 erstreckt sich von einem Materialgelenk 13 achsparallel in Richtung der Werkzeugstirnseite. Die durch den L-förmigen Schlitz 12 vom Trägerkörper 10 abgegrenzte Spannpratze 20 kragt daher in axialer Richtung aus. Der L-förmige Schlitz 12 lässt sich z.B. mittels eines Fräswerkzeugs durch Bearbeitung eines Trägerkörperrohlings in zwei um 90° zueinander versetzten Ebenen erzeugen. Das Materialgelenk 13 definiert eine senkrecht zur Drehachse 3 stehende "Gelenkachse", um die die Spannpratze 20 relativ zum Trägerkörper 10 unter einer elastischen Verformung des Material-gelenks 13 verschwenkbar ist. Aufgrund der vorstehend erwähnten Abflachung des Trägerkörpers 10 hat die Spannpratze 20; in axialer Richtung betrachtet, einen im Wesentlichen quaderförmigen Querschnitt nahezu über die gesamte Länge, zumindest aber in dem das Materialgelenk 13 mitbildenden Längenabschnitt.

An ihrem auskragenden Endabschnitt 21 weist die Spannpratze 20 eine stirnseitige Stützfläche 22 auf, die den Schneidkörper 30 in Richtung des Materialgelenks 13, d.h. in Axial- und Vorschubrichtung des in den Figuren gezeigten Werkzeugs, abstützt. Die stirnseitige Stützfläche 22 steht senkrecht auf der Drehachse 3 und verläuft parallel zur "Gelenkachse" des Materialgelenks 13. Im rechten Winkel zur stirnseitigen Stützfläche 22 weist der auskragende Endabschnitt 21 des Weiteren eine unterseitige Spannfläche 23 auf, die auf dem Schneidkörper 30 aufliegt und eine Spannkraft in eine Richtung einer die Ausnehmung 11 mitbildenden bodenseitigen Stützfläche 14 am Trägerkörper 10 überträgt.

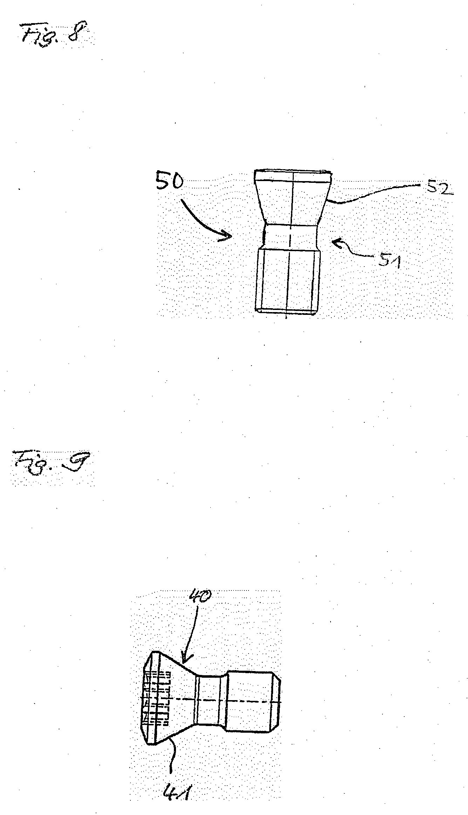

Zur Spannung der Spannpratze 20 relativ zum Trägerkörper 20 ist eine in einer Durchgangsbohrung 25 in der Spannpratze 20 aufgenommene Spannschraube 40 vorgesehen, die in einer entsprechenden Gewindebohrung im Trägerkörper 20 verschraubt ist. Die Spannschraube 40 ist in Fig. 9 gezeigt. Zur Aufnahme des kegeligen Schraubenkopfs 41 der Spannschraube 40, der beispielsweise mit einer Innensechskantausnehmung ausgestattet ist, weist die Durchgangsbohrung 25 in einem der Abflachung des Trägerkörpers 10 liegenden Längenabschnitt eine Kegelsenkung 26 auf, an der eine Kegelfläche 41 der Spannschraube 40 anliegt.

Wie aus Fig. 2 ersichtlich ist, ist die Drehachse der Spannschraube 40 - bei axialer Betrachtung von der Stirnseite des Werkzeugs 1 aus - unter einem spitzen Winkel ß von beispielsweise 15° zu einer Diametralebene E angestellt. Die Diametralebene E steht im rechten Winkel zur stirnseitigen Stützfläche 22 der Spannpratze 20 und der bodenseitigen Stützfläche 14 am Trägerkörper 10. Mittels der Spannschraube 40 kann die Spannpratze 20 daher unter Zwischenschaltung des Schneidkörpers 30 gegen den Trägerkörper 20 gespannt werden.

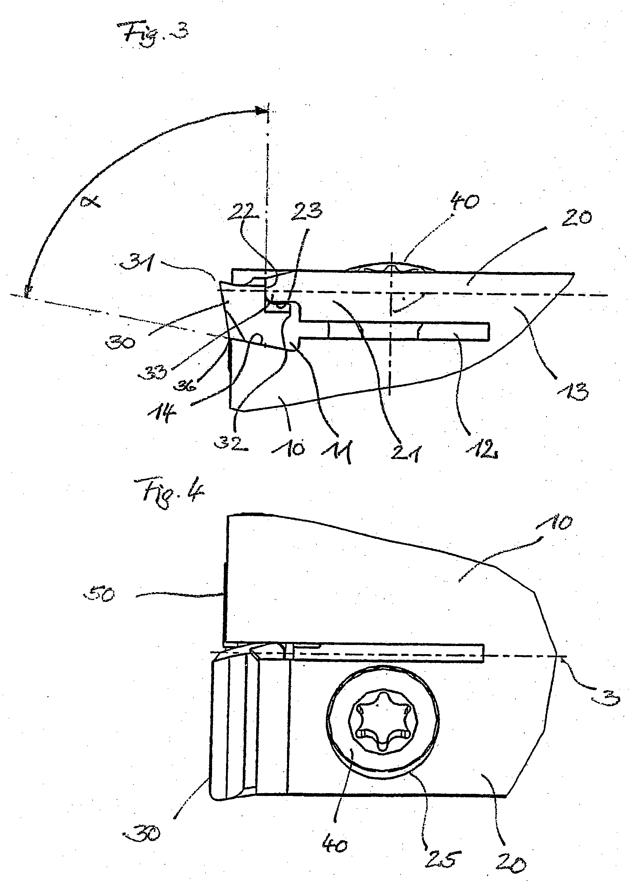

Wie aus Fig. 1 und 3 ersichtlich ist, endet die stirnseitige Stützfläche 22 in axialer Richtung in einem vorgegebenen Abstand vor der Stirnseite des Werkzeugs, so dass die Hauptschneide 31 des Schneidkörpers 30 um das erforderliche Maß über die Stirnseite des Trägerkörpers 20 ragt Der Schneidkörper 30 sitzt, wie in Fig. 1 und 3 gezeigt ist, in der Ausnehmung 11 des Trägerkörpers 10. Bodenseitig ist der Schneidkörper 30 auf der Stützfläche 14 abgestützt, die in einem spitzen Winkel α von etwa 80° zur stirnseitigen Stützfläche 22 steht und zum Materialgelenk 13 hin weist. Dank des spitzen Winkels α zur stirnseitigen Stützfläche 22 an der Spannpratze 20 wirkt die zum Materialgelenk 13 hin weisende Stützfläche 14 am Trägerkörper 10 als eine Keilfläche, entlang der der Schneidkörper 30 beim Spannen gegen die Stützfläche 14 am Trägerkörper 10 zugleich eine Kraftkomponente in eine Richtung hin zum Materialgeienk 13, bei dem in den Figuren gezeigten Werkzeug in eine axiale Richtung bzw. entgegen der Vorschubrichtung, erfährt.

In einer Richtung parallel zu der am Trägerkörper 10 definierten Stützfläche 14 und der an der Spannpratze 20 definierten stirnseitigen Stützfläche 22 liegt der in der Ausnehmung 11 sitzende Schneidkörper 30 an einem im Trägerkörper 10 vorgesehenen Verstellelement 50 in Form einer Kegelschraube 51 an. Die Kegelschraube 51, weist wie es in Fig. 8 gezeigt ist, eine Kegelmantelfläche 52 auf, an der der Schneidkörper 30 anliegt. Wie in Fig. 1 zu sehen ist, ist die Kegelschraube 51 in einer außermittig angeordneten, achsparallel verlaufenden Gewindebohrung 16 im Trägerkörper 10 aufgenommen. Der Schneidkörper 30 ist an der Kegelfläche 52 der Kegelschraube 51 radial abgestützt, so dass er durch ein Einschrauben der Kegelschraube 51 in die Gewindebohrung 16 radial verstellbar ist.

Durch die am Trägerkörper 10 definierte Stützfläche 14, die an der Spannpratze 20 definierte stirnseitige Stützfläche 22 und die Kegelschraube 51 ist die Lage des Schneidkörpers 30 relativ zum Trägerkörper 20 somit in axialer und radialer Richtung festgelegt.

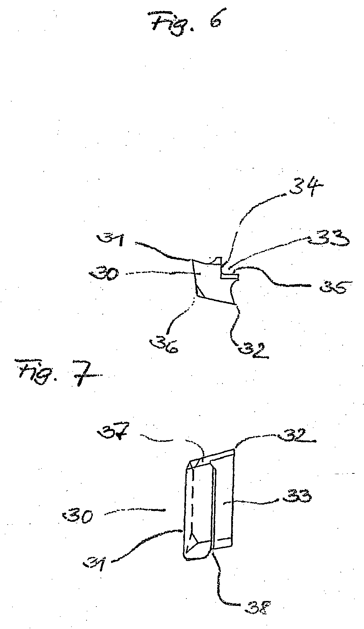

Der Schneidkörper 30 ist als eine längliche Wendeschneidplatte mit zwei einander diametral gegenüberliegenden Schneidkanten 31 , 32 versehen, zwischen denen entlang einer Längskante eine Aussparung 33 ausgebildet ist, in die der stirnseitige Endabschnitt der Spannpratze 20 formschlüssig eingreift. Dies ist am besten in Fig. 1 und 3 zu sehen. Die Aussparung 33 ist entsprechend der stirnseitigen Stützfläche 22 und der dazu rechtwinklig angeordneten Spannfläche 23 von zwei im rechten Winkel zueinander stehenden Flächen 34, 35 definiert, die, wie aus Fig. 6 und 7 ersichtlich ist, über die gesamte Länge der Wendeschneidplatte 30 durchgängig ausgebildet sind.

Ein Wechsel zwischen den beiden Hauptschneiden 31 , 32 der Wendeschneidplatte 30 kommt dadurch zustande, dass die Wendeschneidplatte 30 (in einem abmontierten Zustand) zunächst um 90° um die Längsache und dann zusätzlich noch um 180° um eine dazu senkrechte Achse gedreht wird. Die der Aussparung 33 gegenüberliegende Längskante 36 wie auch die Aussparung 33 bleiben daher beim Wenden der Wendeschneidplätte 30 stets in der gleichen Lage relativ zum Trägerkörper 20. Je nach Lage der Wendeschneidplatte 30 erfolgt die axiale Abstützung an der stirnseitigen Stützfläche 22 der Spannpratze 20 und die Auflage der schneidkörperseitigen Spannfläche 23 daher an der einen bzw. anderen der beiden Flächen 34, 35.

Die die Aussparung 33 bildenden Flächen 34, 35 des Schneidkörpers 30 sind in Richtung des Materialgelenk 13, d.h. bei dem in den Figuren gezeigten Werkzeug in axialer Richtung so bemessen, dass sie um ein vorbestimmtes Maß kleiner sind als die unterseitige Spannfläche 23 der Spannpratze 20. Dadurch ist sichergestellt, dass im montierten Zustand des Schneidkörpers 30 die Spannpratze 20 nur mit ihrer stirnseitigen Stützfläche 22 den Schneidkörper 30 in axialer Richtung stützt.

Fig. 1 zeigt des Weiteren, dass die der in die Aussparung 33 am Schneidkörper 30 eingreifende stirnseitige Endabschnitt 21 der Spannpratze 20 in radialer Richtung so bemessen ist, dass er im Wesentlichen über die gesamte Länge des Schneidkörpers 30 flächig in die Aussparung 33 eingreift.

Zur Montage muss der Werkzeugbediener lediglich den Schneidkörper 30 so in die am Trägerkörper 10 definierte Ausnehmung 11 legen, dass die Spannpratze 20 in die Aussparung 33 eingreift, und dann soweit in radiale Richtung verschieben, bis der Schneidkörper 30 an der Kegelfläche 51 der Kegelschraube 50 zur Anlage kommt

Zum Wechseln oder Wenden des Schneidkörpers 30 wird zunächst die Spannschraube 40 soweit gelockert, dass der Schneidkörper 30 aus der Ausnehmung 11 im Trägerkörper 10 genommen werden kann. Anschließend wird die Ausnehmung 11 gereinigt und entweder ein neuer Schneidkörper oder der alte Schneidkörper in gewendetem Zustand wieder in die Ausnehmung 11 eingesetzt und in radialer Richtung gegen die Kegelschraube 50 gedrückt. In diesem Zustand wird die Spannschraube 40 soweit festgezogen, dass der Schneidkörper 30 unter leichter Spannung in der Ausnehmung 11 des Trägerkörpers 20 sitzt. Anschließend kann durch Betätigung der Kegelschraube 51 die radiale Einstellung des Schneidkörpers 30 auf Fertigmaß vorgenommen werden. Schließlich wird die Spannschraube 40 mit dem erforderlichen Drehmoment festgezogen.

Bei dem vorstehend beschriebenen Werkzeug 1 werden die Schnittkräfte in der Ausnehmung 11 abgefangen, wodurch sich eine extreme Laufruhe ergibt. Durch die einfache und stabile Einspannung des Schneidkörper 30 zwischen der Spannpratze 20 und dem Trägerkörper 10 ergeben sich hohe Werkzeugstandzeiten und hervorragende Oberflächengüten der bearbeiteten Werkstückoberflächen. Das erfindungsgemäße Werkzeug 1 ermöglicht ein einfaches Einstellen der radialen Lage des Schneidkörpers 30 im leicht vorgespannten Zustand, wodurch sich unproduktive Nebenzeiten reduzieren lassen. Das anschließende Festspannen des Schneidkörpers 30 führt zu keiner maßlichen Veränderung der Lage des Schneidkörpers 30 relativ zum Trägerkörper 10, wodurch sich eine konstant bleibende Bearbeitungsgenauigkeit ergibt.

Vorstehend wurde die Erfindung am Beispiel eines rundlaufenden Werkzeugs, z.B. Senkwerkzeugs, erläutert, bei dem eine Wendeschneidplatte 30 in einer bezüglich der Drehachse 3 radial ausgerichteten Ausnehmung 11 am Trägerkörper 20 aufgenommen und in axialer Richtung an der axial auskragenden Spannpratze 20 und in radialer Richtung an der Kegelschraube 51 abgestützt ist.

Dieselben Vorteile ergeben sich aber auch, wenn das erfindungsgemäße Spannkonzept auf andere Werkzeugtypen oder Werkzeuge angewendet wird, so dass Abweichungen von dem zuvor beschriebenen Ausführungsbeispiel möglich sind, ohne den Grundgedanken der Erfindung zu verlassen.

So ist das erfindungsgemäße Spannkonzept, wie es in den Ansprüchen oder in dem einleitenden Teil der Beschreibung beschrieben ist, nicht auf das in den Figuren gezeigte Werkzeug beschränkt sondern, wie eingangs bereits erläutert, auf verschiedene - rundlaufende oder stehende - Werkzeuge zur Spannung axial und/oder radial bzw. in Werkzeugvorschub-/Werkzeugzustellrichtung abzustützender Schneidkörper anwendbar.

Die Spannpratze 20 kann anstelle des L-förmigen Schlitzes 12 auch in anderer Weise vom Trägerkörper 10, beispielsweise durch einen anders geformten Schlitz oder Materialaussparung zwischen Spannpratze 20 und Trägerkörper 10, abgegrenzt sein.

Anstelle der axial verstellbaren Kegelschraube 51 zur radialen Verstellung des Schneidkörpers kann eine Feinversteilung des Schneidkörpers 30 in eine Richtung parallel zur stirnseitigen Stützfläche 22 der Spannpratze und zur bodenseitigen Stützfläche 14 am Trägerkörper beliebige andere geeignete, aus der Praxis bekannte Verstellelemente oder Verstellsysteme zur Feinverstellung zur Anwendung kommen.

Weiter muss die stirnseitige Stützfläche 22 an der Spannpratze 20 nicht - wie in dem vorstehend beschriebenen Ausfühmngsbeispiel - parallel zur "Gelenkachse" des Materialgelenks 13 verlaufen, sondern kann unter einem Winkel zur "Gelenkachse" des Materialgelenks 13 so ausgerichtet sein, dass beim Spannen der Spannpratze 20 gegen den Schneidkörper 30 dieser nicht nur eine Kraftkomponente in Richtung des Materialgelenk 13 sondern zugleich eine Kraftkomponente in eine Richtung parallel zur "Gelenkachse" des Materialgelenks 13, beispielsweise in eine Richtung hin zur Drehachse 3 des Werkzeugs 1 erfährt. Anders ausgedrückt lassen sich die stirnseitige Stützfläche 22 der Spannpratze 20 und die Stützfläche 14 am Trägerkörper 10 relativ zueinander sowie relativ zum Trägerkörper 10 so anordnen und ausrichten, dass der Schneidkörper 30 beim Spannen der Spannpratze 20 die für die erforderliche Lagegenauigkeit geeignete(n) Kraftkomponente(n) erfährt.

Obwohl vorstehend ein Werkzeug mit genau einem Schneidkörper beschrieben wurde, eignet sich das erfindungsgemäße Spannkonzept grundsätzlich auch für ein Werkzeug mit mehreren Schneidkörpern. Sofern ein Werkzeug mehrere Schneidkörper benötigt, können diese jeweils mittels einer zugeordneten Spannpratze an einem Trägerkörper gespannt werden. Die Schneidkörper können in diesem Fall sowohl in Um- fangs- und/oder Axialrichtung versetzt angeordnet sein.

Die Erfindung schafft somit ein Werkzeug, insbesondere ein rundlaufendes Werkzeug für die Bearbeitung, insbesondere für die spanabhebende Bearbeitung, von Werkstücken, bei dem ein Trägerkörper zumindest einen Schneidkörper, insbesondere eine Wendeschneidplatte, positionsgenau trägt. Es ist eine Spanneinrichtung in Form einer einstückig mit einem Trägerkörper ausgebildeten Spannpratze vorgesehen, mit der der Schneidkörper in einer bestimmten Position relativ zum Trägerkörper dadurch fixierbar ist, dass die Spannpratze den Schneidkörper flächig gegen eine Stützfläche am Trägerkörper drückt und der Schneidkörper an einer stirnseitigen Stützfläche der Spannpratze in Richtung eines die Spannpratze mit dem Trägerkörper verbindenden Materialgelenks abgestützt ist. Vorzugsweise ist der zwischen der Spannpratze und dem Trägerkörper angeordnete Schneidkörper des Weiteren in eine Richtung parallel zur Stützfläche am Trägerkörper und zur stirnseitigen Stützfläche der Spannpratze relativ zum Trägerkörper lageeinstellbar angeordnet und in der eingestellten Lage mittels der Spannpratze fixierbar.

## Patentansprüche

1. Werkzeug (1), insbesondere rundlaufendes Werkzeug für die Bearbeitung, insbesondere spanabhebende Bearbeitung, von Werkstücken, mit einem Trägerkörper (10), einem am Trägerkörper (10) lösbar angeordneten Schneidkörper (30) und einer Spannpratze (20) zum lagegenauen Fixieren des Schneidkörpers (30) relativ zum Trägerkörper (10),
wobei der Schneidkörper (30) flächig gegen eine Stützfläche (14) am Trägerkörper (10) gedrückt wird, **dadurch gekennzeichnet,**
**dass** die Spannpratze (20) einstückig mit dem Trägerkörper (10) ausgebildet und über ein Materialgelenk (13) mit dem Trägerkörper (10) verbunden ist,
wobei der Schneidkörper (30) in Richtung des Materialgelenks (13) an einer stirnseitigen Stützfläche (22) der Spannpratze (20) abgestützt ist, und
wobei die Stützfläche (14) am Trägerkörper (10) unter einem spitzen Winkel (α) zur stirnseitigen Stützfläche (22) der Spannpratze (20) steht und zum Materialgelenk (13) hin blickt, **wobei**
der Schneidkörper (30) in einer Richtung parallel zur Stützfläche (14) am Trägerkörper (10) und parallel zur stirnseitigen Stützfläche (22) der Spannpratze (20) lageeinstellbar angeordnet ist, und wobei die Spannpratze (20) durch einen vom Materialgelenk (13) ausgehenden, sich zu einer Drehachse (3) des Werkzeugs (1) achsparallel erstreckenden, L-förmigen Schlitz (12) vom Trägerkörper (20) abgegrenzt ist.

2. Werkzeug (1) nach Anspruch 1, **gekennzeichnet durch** ein im Trägerkörper aufgenommenes Verstellelement (50), das dazu ausgebildet ist, eine Feinverstellung des Schneidkörpers (30) in der Richtung parallel zur Stützfläche (14) am Trägerkörper (10) und parallel zur stirnseitigen Stützfläche (22) der Spannpratze (20) zu ermöglichen.

3. Werkzeug (1) nach Anspruch 2, **dadurch gekennzeichnet, dass** das Verstellelement (50) aus einer von der Stirnseite (4) des Werkzeugs (1) aus axial verstellbaren Kegelschraube (51) mit Kegelmantelfläche (52) gebildet ist, an der der Schneidkörper (30) anliegt.

4. Werkzeug nach Anspruch 1, **dadurch gekennzeichnet, dass** die Spannpratze (20), in axialer Richtung betrachtet, einen im Wesentlichen quaderförmigem Querschnitt aufweist.

5. Werkzeug (1) nach einem der Ansprüche 1 bis 4, **dadurch gekennzeichnet, dass** die stirnseitige Stützfläche (22) der Spannpratze (20) und die Stützfläche (14) am Trägerkörper (10) parallel zur Gelenkachse des Materialgelenks (13) verlaufen.

6. Werkzeug nach einem der Ansprüche 1 bis 5, **dadurch gekennzeichnet, dass** die Spannpratze (20) mittels einer in einer Durchgangsbohrung in der Spannpratze angeordneten Spannschraube (40), die im Trägerkörper (10) verschraubt ist, gegen den Schneidkörper (30) spannbar ist.

7. Werkzeug nach einem der Ansprüche 1 bis 8, **dadurch gekennzeichnet, dass** der Schneidkörper (30) als eine längliche Schneidplatte, vorzugsweise Wendeschneidplatte mit diametral gegenüberliegenden Schneidkanten (31, 32), ausgebildet ist und entlang einer Längskante eine Aussparung (33) aufweist, in die die Spannpratze (20) formschlüssig eingreift.

8. Werkzeug nach Anspruch 7, **dadurch gekennzeichnet, dass** die Aussparung (33) von zwei im rechten Winkel zueinander stehenden Flächen (34,35) definiert ist.

9. Werkzeug nach Anspruch 7 oder 8, **dadurch gekennzeichnet, dass** die Aussparung (33) über die gesamte Länge des Schneidkörpers (30) hinweg durchgängig ist.

10. Werkzeug nach Anspruch 9, **dadurch gekennzeichnet, dass** die Spannpratze (20) im Wesentlichen über die gesamte Länge des Schneidkörpers (30) flächig in die Aussparung (33) eingreift.

## Claims

1. Tool (1), notably a rotating tool for processing and chip removal processing of working pieces, with a support body (10), a detachable cutting body (30) mounted upon the support body (10) and a clamping claw (20) for the precise positioning of the cutting body (30) relative to the support body (10),
whereby the cutting body (30) is pressed flat against a supporting surface (14) upon the support body (10), **hereby characterized,**
that the clamping claw (20) is designed in one piece with the support body (10) and connected through a material joint (13) to the support body (10),
whereby the cutting body (30) is supported in the direction of the material joint (13) on a frontal support surface (22) of the clamping claw (20), and
whereby the supporting surface (14) on the support body (10) stands at a sharp angle (α) to the frontal support surface (22) of the clamping claw (20) and looks toward the material joint (13), **whereby**
the cutting body (30) is positionally adjustable in a direction parallel to the supporting surface (14) on the support body (10) and parallel to the frontal support surface (22) of the clamping claw (20), and whereby the clamping claw (20) is separated from the support body (10) by an L-shaped slot (12) originating from the material joint (13) and extending axially parallel to a pivot axis (3) of the tool (1).

2. Tool (1) according to claim 1, **characterized by** an adjustment element (50) incorporated into the support body, which is designed to enable a fine adjustment of the cutting body (30) in the direction parallel to the support surface (14) on the support body (10) and parallel to the frontal support surface (22) of the clamping claw (20).

3. Tool (1) according to claim 2, **characterized in that** the adjustment element (50) is formed from an axially adjustable tapered screw (51) with a tapered surface shell (52) on the front (4) of the tool (1), onto which the cutting body (30) is fitted.

4. Tool according to claim 1, **characterized in that** the clamping claw (20) exhibits an essential rectangular shaped cross-section when viewed in the axial direction.

5. Tool (1) according to claims 1 through 4, **characterized in that** the frontal support surface (22) of the clamping claw (20) and the support surface (14) on the support body (10) runs parallel to the joint axis of the material joint (13).

6. Tool according to claims 1 through 5, **characterized in that** the clamping claw (20) is tensionable against the cutting body (30) by means of a tensioning screw (40) attached through a bore-hole in the clamping claw and screwed together in the support body (10).

7. Tool according to the claims 1 through 8, **characterized in that** the cutting body (30) is formed as an oblong cutting insert, preferably a reversible cutting insert with diametrically opposing cutting edges (31, 32) and exhibits a recess (33) along the longitudinal edge into which the clamping claw (20) interlocks into place.

8. Tool according to claim 7, **characterized in that** the recess (33) is defined through two, at right angles to each other, positioned surfaces (34, 35).

9. Tool according to claim 7 or 8, **characterized in that** the recess (33) is continuous across the entire length of the cutting body (30).

10. Tool according to claim 9, **characterized in that** the clamping claw (20) essentially fits flat into the recess (33) across the entire length of the cutting body (30).

## Revendications

1. L'outil (1), en particulier un outil rotatif pour le traitement et l'évacuation des copeaux provenant des pièces usinées avec un corps d'appui (10), un corps de coupe amovible (30) monté sur le corps d'appui (10) et une griffe de serrage (20) pour un positionnement précis du corps de coupe (30) par rapport au corps d'appui (10),
dans lequel le corps de coupe (30) est pressé à plat contre une surface d'appui (14) sur le corps d'appui (10), **caractérisé par le fait**
**que** la griffe de serrage (20) est conçue en une seule pièce avec le corps d'appui (10) et reliée au moyen d'un matériau de joint (13) au corps d'appui (10) ;
où le corps de coupe (30) est supporté dans la direction du matériau de joint (13) sur une surface d'appui frontal (22) de la griffe de serrage (20), et
et dans lequel la surface d'appui (14) sur le corps d'appui (10) se situe à un angle aigu (α) par rapport à la surface d'appui frontal (22) de la griffe de serrage (20) et est orienté vers le matériau de joint (13), **où**
le corps de coupe (30) est réglable par positionnement dans une direction parallèle à la surface d'appui (14) sur le corps d'appui (10) et parallèle à la surface d'appui frontal (22) de la griffe de serrage (20) ; où la griffe de serrage (20) est séparée du corps d'appui (10) par une fente en forme de L (12) provenant du joint du matériel (13) et s'allonge sur l'axe en parallèle à un axe de pivot (3) de l'outil (1).

2. Outil (1) selon la revendication 1, **caractérisé par** un élément de réglage (50) incorporé dans le corps d'appui, qui est conçu pour permettre un réglage précis du corps de coupe (30) et positionné en parallèle à la surface d'appui (14) sur le corps d'appui (10) et parallèle à la surface d'appui frontal (22) de la griffe de serrage (20).

3. Outil (1) selon la revendication 2, **caractérisé par** un élément de réglage (50) formé d'une vis conique axiale réglable (51) avec une carapace de surface conique (52) sur le front (4) de l'outil (1), sur lequel le corps de coupe (30) est monté.

4. L'outil selon la revendication 1, **caractérisé par** une griffe de serrage (20) montrant une section rectangulaire essentielle lorsqu'elle est vue dans le sens axial.

5. L'outil (1) selon les revendications 1 à 4, **caractérisé par** la surface d'appui frontal (22) de la griffe de serrage (20) et la surface d'appui (14) sur le corps d'appui (10) qui s'étend en parallèle à l'axe du joint du matériel (13).

6. Outil selon les revendications 1 à 5, **caractérisé par** une griffe de serrage (20) qui peut être serrée contre le corps de coupe (30) au moyen d'une vis de serrage (40) fixé par un trou dans la griffe de serrage. Tous ces éléments sont vissés ensemble dans le corps d'appui (10).

7. Outil selon les revendications 1 à 8, **caractérisé par** un corps de coupe (30) en forme d'insert de coupe oblongue, de préférence un insert de coupe réversible avec des bords de coupe diamétralement opposés (31, 32) et présentant une encoche (33) le long du bord longitudinal, dans laquelle la griffe de serrage (20) est fixée.

8. Outil selon la revendication 7, **caractérisé par** une encoche (33) avec des surfaces positionnées (34, 35) à deux angles droits perpendiculaires.

9. Outil selon la revendication 7 ou 8, **caractérisé par** une encoche (33) transversale sur toute la longueur du corps de coupe (30).

10. Outil selon la revendication 9, **caractérisé par** une griffe de serrage (20) qui se place essentiellement à plat dans l'encoche (33) sur toute la longueur du corps de coupe (30).
